## Europäisches Patentamt

(19) **European Patent Office**

**Office européen des brevets**

(11) Numéro de publication: **0 291 370 B1**

(12) **FASCICULE DE BREVET EUROPEEN**

(45) Date de publication du fascicule du brevet: **27.06.90**

(21) Numéro de dépôt: **88400907.7**

(22) Date de dépôt: **14.04.88**

(51) Int. Cl.⁵: **F16N 29/04, B60R 17/00**

(54) Dispositif de surveillance de la pression d'une pompe à huile entrainée par la transmission d'un véhicule automobile.

(30) Priorité: **12.05.87 FR 8706662**

(43) Date de publication de la demande:
**17.11.88 Bulletin 88/46**

(45) Mention de la délivrance du brevet:
**27.06.90 Bulletin 90/26**

(84) Etats contractants désignés:
**DE GB IT**

(56) Documents cités:
**DE-C- 710 894**
**FR-A- 712 039**
**FR-A- 1 081 950**
**GB-A- 19 641**
**GB-A- 333 184**
**US-A- 1 603 172**
**US-A- 3 093 109**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Chrétien, Philippe, 81, Résidence "Les Régates" Rue Eugène Labiche, F-78290 Croissy Sur Seine(FR)**

(74) Mandataire: **Kohn, Philippe et al, c/o CABINET LAVOIX 2, place d'Estienne d'Orves, F-75441 Paris Cédex 09(FR)**

ACTORUM AG

## Description

La présente invention a pour objet un dispositif de surveillance de la pression du liquide refoulé par une pompe, comprenant un récipient comportant à sa partie inférieure un orifice d'alimentation en liquide sous pression relié au côté refoulement de la pompe et un détecteur de niveau agencé à sa partie supérieure.

Un tel dispositif est connu du document US-A 1 603 172.

L'invention vise plus particulièrement un dispositif de surveillance d'un niveau de pression d'une pompe dont l'aspiration est reliée à un bac de réserve de liquide et dont le refoulement est relié, par un conduit de refoulement, à un organe d'un véhicule dont on désire assurer la lubrification.

La lubrification d'un ensemble mécanique à engrenages, et notamment à trains épicycloïdaux, nécessite parfois l'emploi d'une pompe à huile afin de compenser les effets néfastes dûs à la centrifugation de l'huile.

Lorsqu'un tel ensemble mécanique est utilisé en aval de la boîte de vitesses, par exemple dans le cas d'une boîte transfert de véhicule à quatre roues motrices, la pompe à huile utilisée pour la lubrification est entraînée à une vitesse correspondant à celle des roues auxquelles elle est reliée cinématiquement. La vitesse de rotation de la pompe à huile varie donc dans une plage étendue allant de zéro, lorsque le véhicule est arrêté, jusqu'à une valeur très élevée correspondant à la vitesse maximale du véhicule.

Le bon fonctionnement de ce type de pompe, qui assure la fiabilité d'un organe primordial pour la sécurité du véhicule doit être surveillé en permanence par un dispositif qui indique au conducteur les cas de mauvais fonctionnement de la pompe. Un dispositif classique de surveillance qui provoque le déclenchement d'une alarme, par exemple l'allumage d'un témoin lumineux, dès que la pression chute en dessous d'une valeur prédéterminée ne peut être utilisé dans ce type d'application car il conduit à une alerte inutile du conducteur dès que le véhicule ralentit, ou s'arrête, du fait du quasi-arrêt de la pompe reliée cinématiquement aux roues du véhicule.

On a déjà proposé de résoudre les problèmes posés par la surveillance de ce type de pompe à l'aide d'un dispositif comprenant un manomètre placé en aval de la pompe à huile, un témoin d'alarme au tableau de bord du véhicule, un capteur de la vitesse du véhicule, et des moyens électroniques qui ne valident pas l'allumage de témoin d'alarme lorsque le véhicule roule en dessous d'une vitesse prédéterminée.

Outre son coût élevé, cette solution ne permet pas de résoudre simplement le problème de la détection du seuil de pression qui est difficile à régler du fait des variations de viscosité de l'huile de lubrification; ce problème étant particulièrement important dans le cas d'une pompe "de débit" qui travaille avec une faible contre-pression.

Dans le but de résoudre les problèmes qui viennent d'être mentionnés, la présente invention propose un dispositif de surveillance de la pression du liquide refoulé par une pompe, comprenant un récipient comportant à sa partie inférieure un orifice d'alimentation en liquide sous pression relié au côté refoulement de la pompe et un détecteur de niveau agencé à sa partie supérieure caractérisé en ce que la pompe est reliée cinématiquement à une roue d'un véhicule équipé de la pompe et du dispositif, en ce que le dispositif comprend une bille formant organe de fermeture de valve qui repose sur le fond du récipient pour obturer ledit orifice d'alimentation lorsque la pression de refoulement est inférieure à une valeur prédéterminée, et en ce que la bille est susceptible de se décoller de son siège de valve sous l'effet de vibrations dues au roulage du véhicule et transmises au récipient, permettant ainsi l'écoulement progressif du liquide en cas de mauvais fonctionnement de la pompe.

Grâce à une telle conception, les vibrations transmises à la bille du fait du roulage du véhicule provoquent le décollement de celle-ci de son siège et ainsi l'évacuation progressive du liquide hors du récipient, par l'orifice d'alimentation, jusqu'à ce que le niveau de liquide chute en dessous d'un niveau prédéterminé, détecté par le détecteur de niveau qui est par exemple relié à un témoin lumineux d'alarme disposé au tableau de bord du véhicule et dont il provoque l'allumage.

En cas de fonctionnement normal, et à l'arrêt du véhicule, le niveau de liquide à l'intérieur du récipient se maintient à une valeur constante suffisante pour ne pas provoquer l'allumage du témoin d'alarme, car la bille obture l'orifice d'alimentation empêchant ainsi toute fuite de liquide hors du récipient.

Selon une caractéristique de l'invention, le fond du récipient présente une portion de profil conique qui constitue le siège de valve de la bille.

Le détecteur de niveau peut par exemple être constitué par un flotteur disposé à l'intérieur du récipient et qui provoque l'allumage d'un voyant d'alarme lorsque le niveau du liquide est inférieur au niveau prédéterminé.

Selon un second mode de réalisation de l'invention, le récipient comporte un orifice latéral de retour par lequel peut s'écouler le liquide lorsque ce dernier a atteint un niveau supérieur au niveau prédéterminé.

D'autres caractéristiques et avantages de l'invention apparaîtront à la lecture de la description détaillée de l'invention qui va suivre, pour la compréhension de laquelle on se reportera aux dessins annexés dans lesquels :

- la figure 1 est une vue schématique en coupe d'un premier mode de réalisation du dispositif de surveillance selon l'invention
- la figure 2 est un schéma représentant l'utilisation du dispositif de surveillance de la figure 1 pour assurer le contrôle du fonctionnement d'une pompe à huile pour la lubrification d'un organe mécanique d'un véhicule automobile ; et
- la figure 3 est un schéma du second mode de réalisation du dispositif de surveillance selon l'invention, appliqué au contrôle du fonctionnement d'une pompe à huile de lubrification d'un organe mécanique de véhicule automobile.

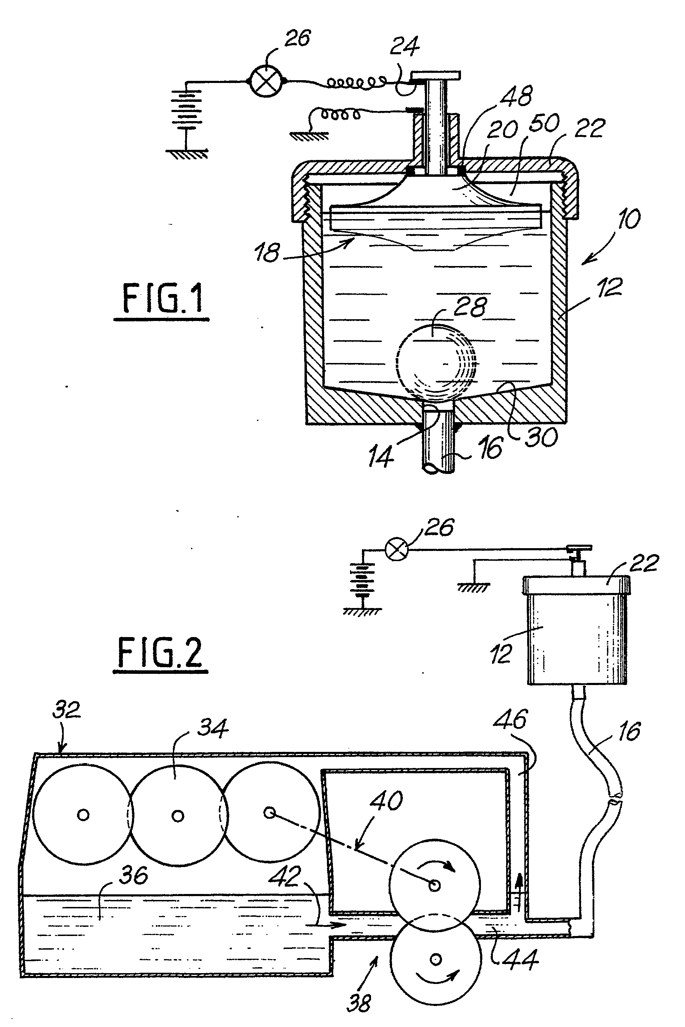

On a représenté à la figure 1 un dispositif de surveillance 10 qui comprend un récipient cylindrique 12, monté dans la caisse du véhicule dans une position sensiblement verticale telle que représentée à la figure. Le récipient cylindrique 12 comporte à sa partie inférieure un orifice d'alimentation en liquide sous pression 14 qui est relié au côté refoulement d'une pompe 38 (figure 2) par un conduit d'alimentation 16.

A la partie supérieure du récipient 12 est agencé un détecteur de niveau 18. Dans ce mode de réalisation de l'invention, le détecteur de niveau 18 est constitué par un flotteur 20, porté par un bouchon amovible supérieur 22 du récipient 12. Le flotteur 20 comporte à sa partie supérieure un contact électrique 24 qui provoque l'allumage d'un témoin lumineux d'alarme 26 lorsque le niveau du liquide à l'intérieur du récipient 12 est inférieur à un niveau prédéterminé. Le voyant d'alarme 26, ou témoin lumineux, est disposé au tableau de bord du véhicule (non représenté).

Conformément à l'invention, le dispositif de surveillance comporte une bille 28 formant un organe de fermeture de valve. Dans sa position de repos, c'est à dire lorsque la pompe ne fournit pas une pression suffisante, ou lorsque le véhicule est à l'arrêt, la bille 28 coopère avec la portion de profil conique 30 du fond du récipient 12, qui constitue le siège de valve de la bille 28, pour obturer l'orifice d'alimentation 14.

On a représenté à la figure 2 un ensemble mécanique 32 qui comporte des éléments tournants 34 entraînés en rotation par la transmission du véhicule. L'ensemble mécanique 32 comporte à sa partie inférieure un bac de réserve de liquide 36, par exemple d'huile de lubrification. La circulation de l'huile du bac 36 et l'arrosage des éléments mobiles 34, dont on veut garantir une bonne lubrification, sont assurés par une pompe 38 reliée cinématiquement aux roues du véhicule par exemple par l'intermédiaire d'un des éléments mobiles 34 comme cela est schématisé à l'aide du trait mixte 40.

Le côté aspiration 42 de la pompe 38 est relié au bac de réserve 36 tandis que son côté refoulement 44 est relié à une conduite de lubrification 46. Conformément à l'invention, le côté refoulement 44 de la pompe 38 est également relié au récipient 12 du dispositif de surveillance 10 par la conduite d'alimentation 16.

On décrira maintenant le mode de fonctionnement de ce premier exemple de réalisation du dispositif de surveillance conforme aux enseignements de la présente invention.

Lorsque le véhicule roule à une vitesse suffisante, la pompe 38 provoque la circulation de l'huile à travers la conduite de lubrification 46 d'une part ainsi que dans la conduite d'alimentation 16 d'autre part. Si le fonctionnement de la pompe est correct et si la pression qu'elle fournit est suffisante, c'est-à-dire supérieure à une valeur prédéterminée, la bille formant élément de fermeture de valve 28 se soulève de son siège de valve conique et permet ainsi au liquide sous pression de pénétrer à l'intérieur du récipient 12. Le liquide sous pression remplit le récipient 12 progressivement jusqu'à ce le niveau à l'intérieur du récipient soit suffisant pour provoquer le soulèvement du flotteur 20 et l'ouverture du circuit électrique qui commande l'allumage du voyant d'alarme 26. Le niveau du liquide continue à monter jusqu'à ce que le joint d'étanchéité 48 disposé dans le couvercle 22 coopère avec la face supérieure 50 du flotteur 20 pour provoquer la fermeture étanche du récipient 12.

Si le véhicule ralentit puis s'arrête, la pompe 38 n'étant plus entrainée en rotation à une vitesse suffisante pour produire une pression supérieure à la valeur prédéterminée, la bille 28 repose à nouveau sur le fond du récipient 12 et obture l'orifice d'alimentation 14. Dans ces conditions, le liquide préalablement accumulé dans le récipient s'y maintient et le flotteur 20 reste en position haute à une altitude supérieure au niveau prédéterminé et le voyant d'alarme 26 qui lui est relié reste éteint.

En cas de panne ou de mauvais fonctionnement de la pompe, alors que le véhicule roule à une vitesse normalement suffisante pour l'entraîner en rotation à une vitesse normale de fonctionnement, les vibrations du véhicule dues au roulage de ce dernier, sont trans mises au récipient 12 et à la bille 28. Sous l'effet de ces vibrations la bille 28 se soulève de son siège conique et n'obture plus en permanence l'orifice d'alimentation 14. Les vibrations provoquent ainsi une série d'ouvertures successives de l'orifice 14 par lequel le liquide s'écoule progressivement jusqu'à ce que le niveau devienne inférieur au niveau prédéterminé et que le flotteur 20 provoque l'allumage du voyant lumineux d'alarme 26.

Dans le second mode de réalisation représenté à la figure 2, le dispositif de surveillance de la pression assure également une fonction de clapet de décharge. Dans ce but, le récipient 12 comporte un orifice latéral de retour 52 par lequel peut s'écouler le liquide lorsque ce dernier atteint un niveau supérieur au niveau prédéterminé pour lequel le contact électrique 24 est ouvert.

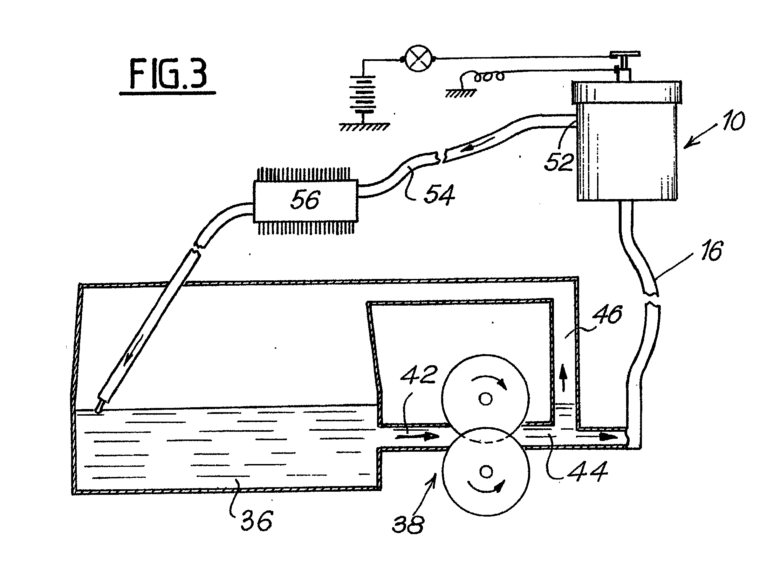

L'orifice latéral de retour 52 est relié à une canalisation de retour 54 sur laquelle est aménagé un échangeur 56 permettant d'effectuer un refroidissement du liquide de lubrification sur son trajet de retour vers le bac à huile 36. Hormis l'adjonction de la fonction de décharge, le dispositif représenté à la figure 3 fonctionne d'une manière identique à celui représenté aux figures 1 et 2.

## Revendications

1. Dispositif de surveillance (10) de la pression du liquide refoulé par une pompe (38), comprenant un récipient (12) comportant à sa partie inférieure un orifice d'alimentation (14) en liquide sous pression relié au côté refoulement (44) de la pompe et un détecteur de niveau (18) agencé à sa partie supérieure caractérisé en ce que la pompe (38) est reliée cinématiquement à une roue d'un véhicule équipé de la pompe et du dispositif, en ce que le dispositif comprend une bille (28) formant organe de fermeture de valve qui repose sur le fond du récipient (12) pour obturer ledit orifice d'alimentation (14) lorsque la pression de refoulement est inférieure à une valeur prédéterminée, et en ce que la bille (28) est susceptible de se décoller de son siège de valve sous l'effet de vibrations dues au roulage du véhicule et transmises au récipient (12), permettant ainsi l'écoulement progressif du liquide en cas de mauvais fonctionnement de la pompe (38).

2. Dispositif de surveillance selon la revendication 1 caractérisé en ce que le fond du récipient présente une portion de profil conique (30) qui constitue le siège de valve de la bille (28).

3. Dispositif selon l'une des revendications 1 ou 2 caractérisé en ce que le détecteur de niveau est un flotteur (20) disposé à l'intérieur du récipient (12) et qui provoque l'allumage d'un voyant d'alarme (26) lorsque le niveau du liquide est inférieur à un niveau prédéterminé.

4. Dispositif selon la revendication 3 caractérisé en ce que le récipient (12) comporte un orifice latéral de retour (52) par lequel s'écoule le liquide lorsque ce dernier atteint un niveau supérieur audit niveau prédéterminé.

5. Dispositif selon la revendication 4 caractérisé en ce que ledit orifice latéral de retour (52) est relié à une canalisation de retour (54) sur laquelle sont aménagés de moyens de refroidissement du liquide (56).

6. Dispositif selon l'une quelconque des revendications précédentes caractérisé en ce que le détecteur de niveau (18) est porté par un couvercle amovibile (22) du récipient (12).

**Patentansprüche**

1. Überwachungsvorrichtung (10) für den Druck der von einer Pumpe (38) geförderten Flüssigkeit, bestehend aus einem Behälter (12), der in seinem unteren Teil eine mit der Druckseite (44) der Pumpe verbundene Öffnung (14) zur Speisung mit Druckfluid und in seinem oberen Teil einen Flüssigkeitsstandfühler (18) besitzt, dadurch gekennzeichnet, daß die Pumpe (38) kinetisch mit einem Rad eines mit der Pumpe und der Vorrichtung ausgerüsteten Fahrzeugs verbunden ist, daß die Vorrichtung eine Kugel (28) aufweist, die ein Absperrorgan bildet, das auf dem Boden des Behälters (12) aufliegt und die Öffnung (14) schließt, wenn der Förderdruck kleiner als ein vorbestimmter Wert ist, und daß sich die Kugel (28) unter der Einwirkung von auf den Behälter (12) übertragenen Fahrtschwingungen des Fahrzeugs von ihrem Ventilsitz abheben kann, so daß die Flüssigkeit im Fall einer Störung des Betriebs der Pumpe (38) allmählich abfließen kann.

2. Überwachungsvorrichtung nach Anspruch 1, dadurch gekennzeichnet, daß der Boden des Behälters einen Bereich konischer Form (30) besitzt, der den Ventilsitz der Kugel (28) bildet.

3. Vorrichtung nach einem der vorhergehenden Ansprüche, dadurch gekennzeichnet, daß der Flüssigkeitsstandfühler ein Schwimmer (20) ist, der im Inneren des Behälters (12) angeordnet ist und die Einschaltung eines Warnlichts (26) bewirkt, wenn der Stand der Flüssigkeit unter einen vorbestimmten Stand sinkt.

4. Vorrichtung nach Anspruch 3, dadurch gekennzeichnet, daß der Behälter (12) eine seitliche Rücklauföffnung (52) besitzt, über die die Flüssigkeit abfließt, wenn sie über den vorbestimmten Stand steigt.

5. Vorrichtung nach Anspruch 4, dadurch gekennzeichnet, daß die seitliche Rücklauföffnung (52) mit einer Rückleitung (54) verbunden ist, in der Einrichtungen (26) zur Kühlung der Flüssigkeit vorgesehen sind.

6. Vorrichtung nach einem der vorhergehenden Ansprüche, dadurch gekennzeichnet, daß der Flüssigkeitsstandfühler (18) von einem abnehmbaren Deckel (22) des Behälters (12) getragen wird.

**Claims**

1. A monitoring device (10) for the preesure of the liquid delivered by a pump (38), comprising a receptacle (12) whose lower portion is formed with a presurized liquid supply aperture (14) connected to the delivery side (44) of the pump, its upper portion having a level detector (18), characterized in that the pump (38) is kinematically connected to a vehicle wheel fitted with the pump and the device; the device comprises a ball (28) forming a valve closure member which rests on the bottom of the receptacle (12) to close the supply aperture (14) when the delivery pressure is lower than a predetermined value; and the ball (28) can be lifted off its valve seat by vibrations which are caused by the rolling of the vehicle and are transmitted to the receptacle (12), thus allowing the progressive discharge of the liquid in case of the pump (38) malfunctioning.

2. A monitoring device according to claim 1, characterized in that the bottom of the receptacle is formed with a portion (30) of conical section which forms the valve seat of the ball (28).

3. A device according to one of claims 1 or 2, characterized in that the level detector is a floater (20) which is disposed inside the receptacle (12) and causes an emergency visual indicator (26) to light up when the level liquid is lower than a predetermined level.

4. A device according to claim 3, characterized in that the receptacle (12) comprises a lateral return orifice (52) via which the liquid flows away when it reaches a level higher than said predetermined level.

5. A device according to claim 4, characterized in that the said lateral return orifice (52) is connected to a return duct (54) incorporating means (56) for cooling the liquid.

6. A device according to any of the preceding claims, characterized in that the level detector (18) by a detachable cover (22) of the receptacle (12).

FIG.1

FIG.2

FIG.3

10

52

16

46

54

56

42

44

36

38

EP 0 291 370 B1